(19) Europäisches Patentamt
European Patent Office
Office européen des brevets

(11) Publication number: **0 278 029 B1**

# (12) EUROPEAN PATENT SPECIFICATION

(45) Date of publication of patent specification: **17.06.92**

(51) Int. Cl.[5]: **C07F 9/48**, C07F 9/38, C08F 30/02

(21) Application number: **87101813.1**

(22) Date of filing: **10.02.87**

## (54) Latex composition.

(43) Date of publication of application:
**17.08.88 Bulletin 88/33**

(45) Publication of the grant of the patent:
**17.06.92 Bulletin 92/25**

(84) Designated Contracting States:
**AT BE CH DE ES FR GB GR IT LI NL SE**

(56) References cited:
**JP-A-57 133 533**
**JP-A-60 166 221**
**US-A- 2 934 555**
**US-A- 3 030 347**

**J. Robinson "Corrosion Inhibitors" 1979 ISBN 0-8155-0757 pages 200 - 202**

**I. Skeist "Handbook of Adhesives" 1977 ISBN 0-442-27634-6 page 528**

(73) Proprietor: **THE DOW CHEMICAL COMPANY**
**2030 Dow Center Abbott Road P.O. Box 1967**
**Midland Michigan 48640-1967(US)**

(72) Inventor: **Schmidt, Donal L.**
**2412 St. Mary's Drive**
**Midland Michigan 48640(US)**
Inventor: **McEwen, Gerald K.**
**County Road 665 Route 3**
**Box 648 Ashland Virginia 23005(US)**
Inventor: **Chen, Frank Bor-Her**
**2709 Mt. Vernon Drive**
**Midland Michigan 48640(US)**

(74) Representative: **Huber, Bernhard, Dipl.-Chem. et al**
**Patentanwälte H. Weickmann, Dr. K. Fincke F.A. Weickmann, B. Huber Dr. H. Liska, Dr. J. Prechtel Kopernikusstrasse 9 Postfach 86 08 20**
**W-8000 München 86(DE)**

EP 0 278 029 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to latex compositions comprising polymers of phosphinyl-containing ethylenically unsaturated compounds.

The phosphinyl-containing ethylenically unsaturated compounds of this invention are useful in preparing polymeric latex compositions when homopolymerized or copolymerized with compounds containing polymerizable 1,2-ethylenically unsaturated moieties. The polymeric latex compositions prepared are useful in anticorrosive latex paints for metals. Polymeric latex compositions prepared from compounds containing 1,2-ethylenically unsaturated moieties are often contacted or applied to metals in various ways.

Japanese Patent Publication 60-166221 discloses a pulverized vaterite type calcium carbonate composition comprising a vaterite type calcium carbonate containing an organic phosphonic acid compound, which can be a polymer or copolymer of methylene phosphonic acid acrylate and methylene phosphonic acid methacrylate or styryl phosphonic acid. Latex compositions are not disclosed.

Japanese Patent Publication 57-133533 discloses a process for producing a duplicated disk for recording information. The first step of this process comprises the forming of a photosensitive layer on a smooth substrate. The photosensitive layer comprises hydroxyethyl methacrylate monophosphate as an adhesion modifying agent. Here again, latex compositions are not disclosed.

A major problem is to find a polymeric composition which has good adherence to particular metals. What is needed is a polymeric composition prepared from compounds containing 1,2-ethylenically unsaturated moieties which have good adherent properties to metal, and other substrates.

In one aspect, this invention is a latex composition which comprises a polymeric composition which comprises the reaction product of: (a) between 0.5 and 100 percent by weight of a (hydroxy)phosphinylalkyl acrylate, (hydroxy) phosphinylalkyl methacrylate, a (dihydroxy)phosphinylalkyl acrylate, methacrylate or ethacrylate, or an alkali metal, alkaline earth metal or ammonium salt thereof; and (b) between 0 and 99.5 weight percent of a compound containing a polymerizable 1,2-ethylenically unsaturated moiety.

The phosphinyl-containing ethylenically unsaturated compound is selected from (hydroxy)-phosphinylalkyl acrylic ester and a (dihydroxy)phosphinylalkyl acrylic ester, particularly including acrylate, methacrylate and ethacrylate esters, as well as the corresponding ammonium, alkali metal, and alkaline earth metal salts thereof. These compounds are hereinafter referred to as "HP Acrylic Monomer" or "DHP Acrylic Monomer".

The latex compositions prepared from the 1,2-ethylenically unsaturated (hydroxy)phosphinyl and (dihydroxy)phosphinyl-containing compounds have surprisingly good adherence to many metals. Furthermore, the latex compositions have enhanced anticorrosive properties.

Preferred HP Acrylic Monomers of this invention are those represented by the following formula:

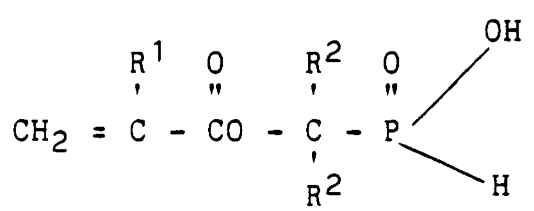
(I)

or

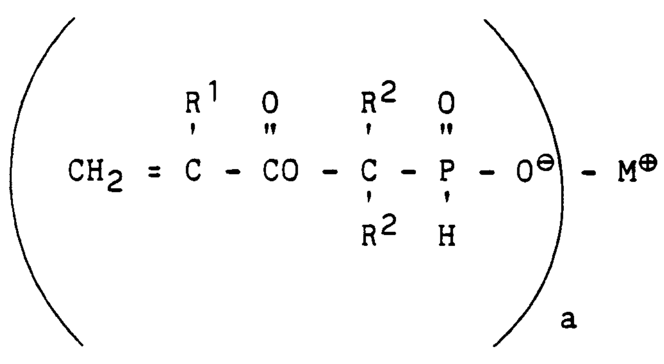
(II)

wherein:

$R^1$ is hydrogen or methyl;

$R^2$ is separately in each occurrence hydrogen or $C_{1-10}$ alkyl;
M is an alkali metal, alkaline earth metal or ammonium; and
a is 1 or 2.

In the embodiment wherein M is an ammonium moiety or an alkali metal, a is 1. In the embodiment wherein M is an alkaline earth metal, a is 2.

In the above formula, $R^2$ is preferably hydrogen or $C_{1-3}$ alkyl, more preferably hydrogen or methyl, and most preferably hydrogen. $R^1$ is most preferably methyl. M is preferably an ammonium moiety or an alkali metal. M is more preferably an ammonium moiety, potassium or sodium. Preferably, a is 1.

The (hydroxy)phosphinylalkyl acrylates and (hydroxy)phosphinylalkyl methacrylates can be prepared by the reaction of hypophosphorous acid with a suitable aldehyde or ketone to prepare an α-hydroxyalkylphosphorous acid, which is thereafter reacted with acrylic or methacrylic acid to prepare the novel compounds. This reaction sequence is exemplified by equations III and IV.

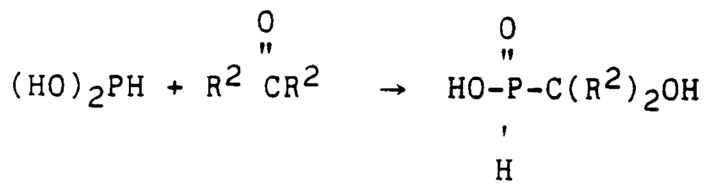

(III)

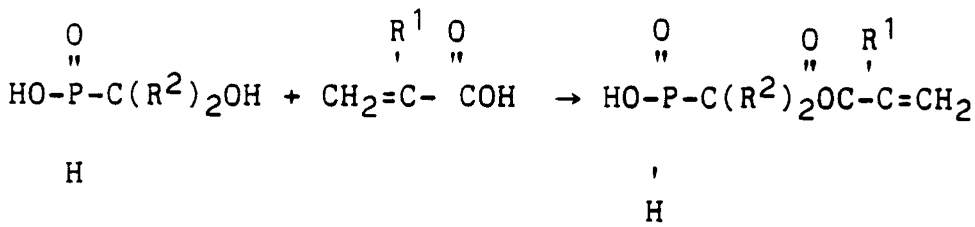

(IV)

wherein $R^1$ and $R^2$ are as defined hereinbefore.

In the first step of this process, the hypophosphorous acid is contacted with a suitable aldehyde or ketone in a ratio of between 3:1 and 1:1. In this reaction there cannot be an excess of aldehyde or ketone as such an excess would result in multiple additions of aldehyde or ketone to the acid. This process is done in an aqueous solution. It is preferable to add the aldehyde or ketone to an aqueous solution of the hypophosphorous acid, as this reaction is exothermic and slow addition results in much better control of the reaction temperature.

Generally, this step can be run at any temperature at which the reaction proceeds. Preferable temperatures are between 20°C and 100°C, with temperatures between 70°C and 90°C being most preferred.

This process may be run at any pressure at which the reaction occurs. Atmospheric, subatmospheric and superatmospheric pressures may be used. Atmospheric pressure is preferred. Although not necessary, it is advantageous to run this reaction under and inert gas atmosphere. Examples of inert gasses include nitrogen and argon.

Any reaction time which gives the desired conversion is suitable. Generally, reaction times of between three and ten hours are preferable. Upon completion of the reaction, the water solvent is stripped off.

The hydroxyalkylphosphorous acid prepared in the above-described reaction is then contacted with methacrylic acid or acrylic acid in a ratio of between 3:1 and 1:3, with a ratio of between 2:1 and 1:2 being preferred, and with a ratio of 1:1 being most preferred. Where there is an excess of one reagent, it is preferable that that reagent be methacrylic or acrylic acid. This process is generally run in an inert organic solvent. Examples of preferred inert organic solvents are aromatic hydrocarbons and chlorinated solvents. Among more preferred solvents are perchloroethylene and xylene. It is preferred that the solvent used have a boiling point over 100°C, and most preferred that the solvent have a boiling point over 120°C.

This reaction is done in the presence of an esterification catalyst. Preferred esterification catalysts are strong acids. More preferred strong acids include sulfonic acids, sulfuric acids and phosphoric acid. A most preferred catalyst is p-toluene sulfonic acid.

Any temperature at which the reaction proceeds is suitable. This reaction is preferably done at the

reflux temperature of the solvent. It is more preferable that the reflux temperature be over 100 ° C, with a reflux temperature of over 120 ° C being most preferred.

During the course of this process, water is formed as a by-product. It is preferred to remove the water as formed, as the process is an equilibrium process and the removal of water drives the reaction to completion.

This reaction may be run at atmospheric and superatmospheric pressures. Atmospheric pressure is preferred. An inert atmosphere can be used.

Reaction times which give the desired conversion are suitable. Preferable reaction times are between four and ten hours.

Preferred DHP Acrylic Monomers of the invention are those corresponding to the formula

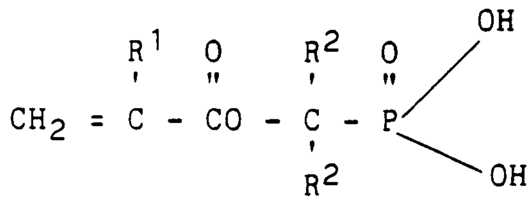

(V)

or

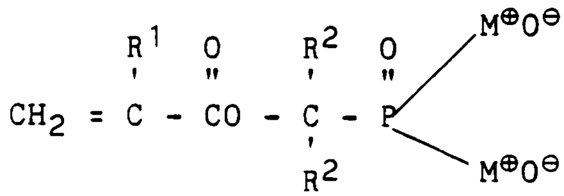

(VI)

wherein $R^1$ is hydrogen, methyl or ethyl; $R^2$ is selected independently from hydrogen and alkyl of 1-10 carbon atoms and $M^+$ is an ammonium cation, an alkali metal cation or 1/2 an alkaline earth cation.

It will be understood that the ammonium cation can be represented as $NH_4^+$; the alkali metal cations as $Li^+$, $Na^+$, $K^+$, $Rb^+$ and $Cs^+$ and that "1/2 an alkaline earth metal cation" will correspond to 1/2 $Mg^{++}$, 1/2 $Ca^{++}$, 1/2 $Ba^{++}$ or 1/2 $Sr^{++}$. Therefore, a typical alkaline earth, the calcium salt, can be represented by the structure:

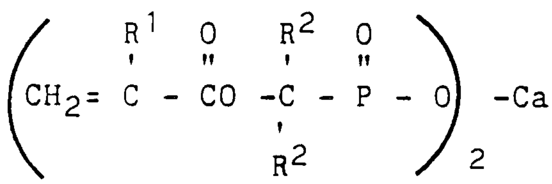

(VII)

Preferred monomers in accordance with the foregoing formulas are those wherein $R^1$ is hydrogen or methyl and $R^2$ is selected independently from hydrogen and alkyl of 1-3 carbon atoms. Most preferably, the DHP Acrylic Monomer is (dihydroxy)phosphinylmethyl methacrylate, that is, a compound wherein $R^1$ is methyl and $R^2$ is hydrogen.

Preferred salts are those wherein $M^+$ is an ammonium cation, a sodium cation or a potassium cation.

The DHP Acrylic Monomers can be prepared by reaction between a dialkylphosphonoalkyl acrylic ester and a trialkylhalosilane to produce an intermediate bis(trialkylsilyl)ester, which is saponified to a corresponding salt and can be acidified to produce a DHP Acrylic Monomer in the form of a free acid.

Dialkylphosphonoalkyl acrylic esters are known compounds and are disclosed by O'Brien et al. in U. S. Patents 2,934,555 and 3,030,347.

Dialkylphosphonoalkyl acrylic esters are made by adding a dialkyl hydrogen phosphite to an aldehyde or ketone to produce an intermediate dialkyl 1-hydroxyalkylphosphonate, which is converted to an acrylic ester by reaction with an acrylic halide in the presence of a hydrogen chloride acceptor.

The reactions can be represented by the equations:

$$R^{2}\underset{\overset{\|}{O}}{C}R^{2} + H\text{-}\underset{\overset{\|}{O}}{P}(Oalk)_{2} \longrightarrow HOC(R^{2})_{2}\underset{\overset{\|}{O}}{P}(Oalk)_{2} \quad (VIII)$$

$$H_{2}C{=}CR^{1}COX + HOC(R^{2})_{2}\underset{\overset{\|}{O}}{P}(Oalk)_{2} + base \longrightarrow \quad (IX)$$

$$CH_{2}{=}CR^{1}COOC(R^{2})_{2}\underset{\overset{\|}{O}}{P}(Oalk)_{2} + base\cdot HX$$

wherein alk is lower alkyl; X is chlorine, bromine or iodine; and "base" is a hydrogen halide acceptor.

Because formaldehyde and lower aldehydes are more reactive with the dialkyl hydrogen phosphites than higher aldehydes or ketones, it is preferred to make and use the lower members of the series of compounds for use as intermediates.

Further conversioin of a dialkylphosphonoalkyl acrylic ester to the DHP Acrylic Monomer can be represented, in the case using chlorotrimethylsilane, by the equations:

$$CH_2=CR^1COO(R^2)_2\underset{\overset{\|}{O}}{P}(Oalk)_2 + 2\ Me_3SiX \longrightarrow \qquad (X)$$

$$CH_2=CR^1COOC(R^2)_2\underset{\overset{\|}{O}}{P}(OSiMe_3)_2$$

$$CH_2=CR^1COOC(R^2)_2\underset{\overset{\|}{O}}{P}(OSiMe_3)_2 + 2\ MOH \longrightarrow \qquad (XI)$$

$$CH_2=CR^1COOC(R^2)_2\underset{\overset{\|}{O}}{P}(O^{-+}M)_2$$

$$CH_2=CR^1COOC(R^2)_2\ \underset{\overset{\|}{O}}{P}(O^{-+}M)_2 + 2\ HX \longrightarrow \qquad (XII)$$

$$CH_2=CR^1COOC(R^2)_2\underset{\overset{\|}{O}}{P}(OH)_2 + 2\ MX$$

wherein Me is methyl; and alk, M and X are as above or HX corresponds to a strong acid other than a hydrohalic acid.

Transesterification of the dialkylphosphonoalkyl acrylic ester with trialkylhalosilane is done in an aprotic solvent, for example acetonitrile, benzene, toluene, dimethylformamide, dimethyl sulfoxide or the like. The use of acetonitrile is preferred.

At least two moles of trialkylhalosilane are employed for each mole of dialkylphosphonoalkyl acrylic ester. It is preferred to use two moles of a halotrimethylsilane. Although it is possible to use iodotrimethylsilane for this reaction, it has been found in accordance with this invention that the transesterification can be carried out readily using chlorotrimethylsilane if a stoichiometric amount of an iodide donor is present in the reaction mixture. Accordingly, it is preferred to use a reaction mixture containing two moles of chlorotrimethylsilane and two moles of an alkali metal iodide, preferably sodium iodide or potassium iodide.

The reaction can be carried out at any temperature at which the reaction will occur. However, the reaction occurs within a reasonable amount of time at room temperature. Accordingly, reaction temperatures of from 15°C to 50°C are preferred.

The reaction can be done at any pressure. However, the reaction occurs readily under ambient conditions so that the use of pressure or vacuum apparatus is unnecessary. Therefore, the reaction is preferably done at atmospheric pressure.

Owing to the hydrolytic instability of trialkylhalosilanes, it is preferred to conduct the reaction under essentially anhydrous conditions. The use of a drying agent, e.g., a calcium chloride or Drierite tube, is preferred. It is further preferred to conduct the reaction under a dry inert atmosphere, for example, under dry nitrogen or dry argon.

At the end of the reaction, the mixture is hydrolyzed by addition of at least two moles of water per mole of bis(trialkylsilyl)phosphonoalkyl acrylic ester. The mixture is stirred to permit separation of a slightly soluble salt, which is removed by filtration. The intermediate is subjected to hydrolysis with a base, which cleaves the trialkylsilyl groups and produces a corresponding metal salt. This reaction occurs readily at room temperature and pressure, so that elevated pressures and temperatures need not be employed. The salt can be used directly in the preparation of polymeric compositions of this invention. The (dihydroxy)-phosphinylalkyl acrylic compound can be polymerized in the form of the salt and, if desired, the resulting polymer can be acidified to convert the salt to the corresponding acid form.

The resulting monomeric salt can be converted to the free acid by treatment with a stoichiometric amount of a mineral acid, such as hydrochloric, hydrobromic, hydroiodic, sulfuric or phosphoric acid.

The latex compositions of this invention comprise the product obtained by vinylic polymerization of an HP or a DHP Acrylic Monomer. The latex compositions of this invention include homopolymers of the HP or DHP Acrylic Monomers as well as copolymers with at least one other compound containing a polymerizable 1,2-ethylenically unsaturated moiety.

The latex compositions preferably comprise the reaction product of

(a) between 0.5 percent and 99 percent by weight of an HP or a DHP Acrylic Monomer; and

(b) between 99.5 percent and 1 percent by weight of at least one copolymerizable 1,2-ethylenically unsaturated compound.

The latex compositions of this invention more preferably contain between 1 percent and 10 percent by weight of the novel HP or DHP Acrylic Monomers of this invention, and most preferably, between 1 percent and 5 percent by weight of the HP or DHP Acrylic Monomer.

The phosphinyl monomers for the latex composition of this invention are usually clear, viscous liquids which are soluble in water and polar organic solvents, such as methanol, ethanol and dimethyl sulfoxide.

The salts of the (hydroxy)phosphinylalkyl acrylate, (hydroxy)phosphinylalkyl methacrylate, (dihydroxy)-phosphinylalkyl acrylate, methacrylate, or ethacrylate are prepared by contacting the (hydroxy)-phosphinylalkyl acrylate, (hydroxy)phosphinylalkyl methacrylate, with a base which contains an alkali metal, alkaline earth metal or an ammonium moiety in water under conditions such that the salts are formed. Conditions for such reactions are well-known to those skilled in the art. Examples of preferable bases include ammonium hydroxides, alkali metal hydroxides, alkali metal carbonates, alkaline earth metal hydroxides and alkaline earth metal carbonates.

Alkali metal refers herein to lithium, sodium, potassium, rubidium and cesium. Preferred alkali metals are lithium, potassium and sodium, with potassium and sodium being most preferred. Alkaline earth metal refers herein to beryllium, magnesium, calcium, strontium and barium. Preferred alkaline earth metals are magnesium and calcium.

Any compound which contains a polymerizable 1,2-ethylenically unsaturated moiety is useful in this invention. Examples of such compounds include monovinyl aromatics, such as styrene, p-vinyl toluene, p-chlorostyrene; $\alpha,\beta$-ethylenically unsaturated acids, such as acrylic acid and methylacrylic acid; alkyl esters of $\alpha,\beta$-ethylenically unsaturated monocarboxylic acids, containing from 1 to 18 carbon atoms in the alkyl group, such as methyl acrylate, ethyl acrylate, 2-ethylhexyl acrylate and methyl methacrylate; $\alpha,\beta$-ethylenically unsaturated nitriles, such as acrylonitrile and methacrylonitrile; $\alpha,\beta$-ethylenically unsaturated amides, such as acrylamide and methacrylamide; vinyl esters, such as vinyl acetate and vinyl propionate; vinyl halides, such as vinyl chloride and vinyl bromide; vinyl ethers such as vinyl methyl ether and vinyl ethyl ether; vinyl ketones, such as vinyl methyl ketone and vinyl ethyl ketone; vinylidene halides, such as vinylidene chloride and vinylidene bromide; hydroxyalkyl esters of acrylic and methacrylic acids, such as hydroxypropyl acrylate, hydroxyethyl acrylate, and hydroxybutyl acrylate; nitriles of ethylenically unsaturated carboxylic acids such as acrylonitrile and methacrylonitrile; ethylenically unsaturated carboxylic acids such as acrylic acid; ethylenically unsaturated alcohols such as allyl alcohol and aromatic compounds substituted with 1,2-ethylenically unsaturated moieties such as, styrene, vinyl toluene and tert-butylstyrene.

The latex compositions of this invention are prepared by methods well-known in the art, and such preparations are not the point of this invention. Suitable polymerization techniques include solution polymerization, dispersion polymerization, emulsion polymerization, bulk polymerization, and heterogeneous polymerization. These polymerizations can be done in continuous or batchwise manner where appropriate.

In one embodiment, the latex compositions of this invention can be prepared by free radical initiated solution polymerization. In particular, the phosphinyl-substituted 1,2-ethylenically unsaturated monomers are homopolymerized, or copolymerized with one or more compounds which contain a polymerizable 1,2-ethylenically unsaturated moiety, in an organic solvent medium in the presence of a free radical type catalyst under an oxygen-free atmosphere. The monomeric constituents are mixed and polymerized in the proportions set out hereinbefore.

Exemplary solvents include the lower alkanols such as ethanol, propanol, and butanol; aromatic hydrocarbons such as toluene, benzene and xylene; halohydrocarbons such as methylene chloride and tetrachloroethane and others such as butyl acetate and butoxyethyl acetate.

Representative catalysts employed in free-radical catalyzed polymerizations include azo and peroxide-types; e.g., peroxides such as benzoyl peroxide, hydroperoxides such as t-butyl hydroperoxide; peracids such as perbenzoic acid; peresters, such as t-butyl peroctoate; and azo compounds such as

azobisisobutyronitrile. Free radical catalyzed polymerization is readily effected at temperatures of from room temperature (20° C) to 200° C under atmospheric to superatmospheric pressure at catalyst concentrations of 0 in the case of thermal initiation to 5 weight percent based on weight of monomers, preferably from 0.01 to 5 weight percent of catalyst in pure form or in an inert solvent for the catalyst. Thermal initiation generally occurs at temperatures between 60° C-120° C.

Often, it may be necessary to employ a chain regulator in order to provide a molecular weight in the range desired. Examples of chain regulators that may be employed include long chained alkyl mercaptans, e.g., t-dodecyl mercaptan of the formula:

$H_3CC(CH_3)_2CH_2C(CH_3)_2CH_2C(CH_3)_2SH$, (XIII)

short chained alkyl mercaptans such as butyl mercaptan and 2-hydroxyethyl mercaptan; isopropanol, isobutanol, long chained alcohols, e.g., lauryl alcohol, octyl alcohol, cumene, carbon tetrachloride, tetrachloroethylene, and trichlorobromomethane. The amount of chain regulator that may be employed depends on the particular system and the conditions and may vary from 0 to 5 weight percent based on monomer weight. Illustratively, the use of from 0 to 1 weight percent of t-dodecyl mercaptan serves to provide as wide a range of molecular weight in aqueous media as is desirable.

In another embodiment, the latex compositions of this invention can be prepared by ionic polymerization techniques.

Representative ionic catalysts include lithium based catalysts, e.g., metallic lithium, alkyl lithium and other lithium compounds, and Ziegler catalysts, e.g., reducible halide of titanium or vanadium in combination with aluminum trialkyl, or diethylaluminum chloride, or lithium aluminum hydride. Ionic polymerization is advantageously carried out in an inert hydrocarbon solvent such as lower alkane or lower aromatic hydrocarbon at temperatures in the order of -20° C to 140° C under pressures ranging from atmospheric to superatmospheric and in the presence of from 1 to 200 ppm of ionic catalyst based on weight of monomers. Polymerization can be similarly effected by cationic catalysts at temperatures of from - 100° C to 100° C. Such catalysts include the etherates of boron trifluoride and aluminum trichloride and Ziegler catalysts such as the reaction product of reducible transition metal compounds, such as titanium tetrachloride or trichloride and reducing organo metallic compounds such as triethyl aluminum or diethylaluminum chloride.

In another embodiment, low pressure polymerization techniques can be used wherein the compounds containing the polymerizable 1,2-ethylenically unsaturated moieties are alpha-olefins.

The low pressure polymerization of alphaolefins with catalyst systems composed of a partially reduced, heavy transition metal components and organometallic reducing component to form high density, high molecular weight, solid, relatively linear polymers is well-known. Characteristically, such polymerizations are carried out in an inert organic liquid diluent under an inert atmosphere and at relatively low temperatures, e.g., 0° C to 100° C, and low pressures, e.g., 0 to 100 psig. Typical transition metal components are the halides, oxyhalides, alkoxides and metals selected from Groups IVB, VB, VIB and VIII of the Periodic Table of Elements appearing in the Handbook of Chemistry and Physics, 48th ed., Chemical Rubber Company. Common organometallic components include the metal alkyls, metal alkyl halides and dihalides, metal hydrides and similar compounds in which the metals are selected from groups IA, IIA and IIIA of the Periodic Table of Elements. The alphaolefin polymers produced by low pressure polymerization generally have molecular weights in the range of 100,000 to 300,000 or even as high as 3,000,000.

In yet another embodiment, the latex composition of this invention can be prepared by emulsion polymerization, wherein the monomers are dispersed in an aqueous medium containing a free radical type catalyst and a stabilizing emulsifier or mixture of emulsifiers. Suitable free radical catalysts include the persulfates (including ammonium, sodium and potassium persulfate), hydrogen peroxide, the perborates, and the percarbonates. Organic peroxides may also be used either alone or in addition to an inorganic peroxygen compound. Typical organic peroxides include benzoyl peroxide, tert-butyl hydroperoxide, cumene peroxide, acetyl peroxide, caproyl peroxide, tert-butyl perbenzoate, tert-butyl diperphthalate and methyl ethyl ketone peroxide. The usual amount of catalyst required is roughly from 0.01 to 3.0 weight percent, based on the monomer mix. In order to enhance rate of polymerization, improve polymer properties, and to reduce undesirable side reactions, it is often desirable to activate the catalyst. Activation of the catalyst also has the effect of lowering the temperature required to polymerize the monomers. The activation may be best accomplished by using a redox system in which a reducing agent within the limit of 0.001 to 6.0 weight percent based on the monomers is present, in addition to the peroxide catalyst. Many examples of such redox systems are known. Agents such as hydrazine or a soluble oxidizable sulfoxy compound, including the alkali metal salts of hydrosulfites, sulfoxlates, thiosulfates, sulfites and bisulfites

can be employed. Redox systems may be activated by the presence of a small amount (a few parts per million) of polyvalent metal ions. Ferrous ions are commonly and effectively used, or a tertiary amine which is soluble in the reaction medium may also be used as an activator.

Stabilizing emulsifiers suited for the purposes of this invention include the anionic and nonionic surfactants. Examaples of suitable anionic surfactants include the alkyl aryl sulfonates, the alkali metal alkyl sulfates, the sulfonated alkyl esters and the fatty acid soaps. Specific examples of these well-known emulsifiers, for the purpose of illustration and not for limitation, are sodium butylnaphthalene sulfonate, sodium lauryl sulfate, disodium dodecyldiphenyl ether disulfonate, N-octadecyl disodium sulfosuccinamate, dihexyl sodium sulfosuccinate and dioctyl sodium sulfosuccinate. A preferred anionic surfactant is disodium dodecyldiphenyl ether disulfonate.

Suitable nonionic surfactants include the polyethenoxy agents, e.g., ethylene glycol polyethers and ethylene nonylphenol polyethers, and the like; fatty acid esters of polyhydric alcohols, e.g., propylene glycol fatty acid ester. Other suitable nonionic emulsifiers are described in Becher, Emulsions: Theory and Practice, 2d. ed., Reinhold Publishing Corporation, New York, 221-225 (1965). A preferred nonionic emulsifier is ethylene nonylphenol polyether having 40 moles of ethylene oxide per mole of nonylphenol.

The amounts of surfactants required depend primarily on the concentrations of monomers to be handled and, to a further extent, with the choice of kind of surfactants, monomers, and proportions of monomers. Generally, the amount of emulsifying agent required falls between 0.5 and 10 weight percent of the mixture of monomers. A preferable emulsifier system for preparing the latexes of this invention is an mixture of from 0.1 part to 0.5 part of an anionic surfactant and from 4 parts to 5 parts of a nonionic surfactant per 100 parts monomer used in the preparation of the latex. Latexes which do not have a measurable amount of coagulum are readily obtained when the amount is from 0.2 to 0.3 part of anionic surfactant and from 4.0 parts to 4.2 parts of nonionic surfactant per 100 parts of monomer.

Polymerization of the monomers is suitably carried out at temperatures between room temperature and 100°C, preferably between 65°C and 80°C. As mentioned previously, the use of catalyst activators lowers the required temperature of polymerization. During polymerization, the temperature may be controlled in part by the rate at which the monomers are supplied and polymerized and/or by applied cooling.

As taught in the art, emulsion polymerization may be performed batchwise or continuously. It is possible to work entirely batchwise, emulsifying the entire charge of monomers and proceeding with polymerization. It is usually advantageous, however, to start with part of the monomers which are to be used and add the remainder of the monomer or monomers as polymerization proceeds. An advantage of gradual monomer addition lies in reaching a high solids content with optimum control and with maximum uniformity of product.

In yet another embodiment, heterogeneous polymerization techniques may be used to prepare the latex compositions of this invention. Heterogeneous catalysts are readily obtained by mixing an alkyl aluminum with a reducible compound of a metal of Groups IVA, VA, VIA and VIII of the Periodic Chart. Examples of alkyl aluminum compounds which may be used include trimethyl aluminum, triethyl aluminum, triisobutyl aluminum, tri-n-butyl aluminum, tri-n-pentyl aluminum, diethyl aluminum chloride and diethyi aluminum hydride. Metals of the above-listed groups include titanium, zirconium, hafnium, thorium, uranium, vanadium, niobium, tantalum, chromium, molybdenum,. tungsten and iron. Examples of suitable reducible compounds of these metals include halides, e.g., chlorides and bromides; oxyhalides, e.g., oxychlorides; complex halides, e.g., complex fluorides; freshly precipitated oxides or hydroxides; and organic compounds, e.g., alcoholates, acetates, benzoates, or acetyl acetonates. Titanium compounds are preferred, for example, titanium tetrachloride, titanium oxychloride or titanium acetyl acetonate. An especially preferred heterogeneous catalyst is a mixture of triisobutyl aluminum and titanium tetrachloride. Such catalyst systems are prepared by dissolving each of the catalyst components in an inert liquid vehicle such as hexane under an oxygen- and moisture-free atmosphere, e.g., nitrogen, argon, helium and the like. Actual procedures for preparing these catalyst systems are described in more detail in U.S. Patent Nos. 3, 113, 115 and 3,257,332 of Karl Ziegler et al.

The heterogeneous catalyst process is carried out in the absence of molecular oxygen, carbon monoxide, carbon dioxide and water in a conventional reaction vessel which permits bubbling of the monomers through the inert vehicle which contains the catalyst. The polymerization is conducted at temperatures in the range of between 30°C and 100°C and preferably between 85°C and 95°C. For convenience of handling the gaseous alphs-olefins, the polymerization zone is maintained under a pressure between atmospheric and 115 pounds per square inch gauge (790 kPa gauge) for the first stage, preferably at a pressure in the range of between 55 and 65 psig (380 and 450 kPa gauge). In a preferred embodiment, the first stage is carried out in the presence of a molecular weight polymerization control agent such as hydrogen, acetylene, and other commonly employed chain transfer agents. If hydrogen is used as the

molecular weight control agent, the amount of hydrogen employed ranges from 1 to 90 mole percent based on the monomer feed, and preferably from 25 to 50 mole percent. However, it is preferred that the molecular weight control agent not be present during polymerization of the second stage. The polymerization process may be carried out in a batchwise or continuous manner.

Upon completion of polymerization, any excess monomer is vented. The mixture is then treated by any conventional method to deactivate the catalyst and remove the catalyst residues and recover the polymer mixture. In one method, deactivation of the catalyst is accomplished by washing the slurry mixture with an alcohol such as methanol, n-propanol and isopropanol. The polymer is then separated from the diluent, e.g. by decantation, filtration or other similar method, after which the polymer is dried.

In yet another embodiment, the latex composition of this invention may be prepared by bulk polymerization, wherein the monomeric components are directly contacted in the presence of a catalyst. In bulk polymerizations, free radical catalysts may be used. Such free radical catalysts are described hereinbefore. Polymerization catalyst concentrations are generally between 0.001 and 5 weight percent. Temperatures are between room temperature (20 °C) and 200 °C. Atmospheric and superatmospheric pressures may be used. Due to problems in the dissipation of heat in exothermic bulk polymerizations, bulk polymerisation may either be terminated at relatively low conversions of between 40 and 60 weight percent and excess monomer distilled off, or the polymerization may be carried out in two steps. In the first step, a large batch of monomer is polymerized to an intermediate conversion and then, for ease of heat dissipation, the polymerization is completed in thin layers. The reaction may be carried to completion while the monomer-polymer mixture flows either through a small diameter tube or down the walls of a column or by free fall in thin streams.

In yet another embodiment, the latex compositions of this invention may be prepared by suspension polymerization techniques. In suspension polymerization, the catalyst is dissolved in the monomer, the monomer is dispersed in water, and a dispersing agent is incorporated to stabilize the suspension formed. Suspending agents are generally water-soluble organic polymers, such as poly(vinylalcohol), poly(acrylic acid), methyl cellulose, gelatin and various pectins; and water insoluble inorganic compounds such as kaolin, magnesium silicates, aluminum hydroxide, and various phosphates. Free radical catalysts described hereinbefore are useful for these suspension polymerizations. Generally, catalyst concentrations of between 0.001 and 5 weight percent based on the monomer are used. Temperatures of between room temperature (20 °C) and 200 °C are suitable. The polymers prepared are in the form of finely granulated beads which are easily recovered by filtration and dried.

The choice of the particular polymerization process to be used depends upon the particular monomer system used and the desired properties of the latex composition. Those skilled in the art can well make such choices.

The latex compositions of this invention have increased adhesion to metals and anticorrosion properties. These latex compositions are useful in anticorrosive latex paints for metals.

The following examples are provided for illustrative purposes only, and not intended to limit the scope of the invention or the claims. All parts and percentages are by weight unless otherwise specified.

## Example 1

### A - Preparation of Hydroxymethylphosphorous Acid

In a 500-ml, 3-neck flask, fitted with a magnetic stirrer, thermometer, nitrogen inlet and condenser, was placed 264 g of 50 percent hypophosphorous acid. The solution was heated to 80 °C while stirring. Paraformaldehyde (66 g) was then added portionwise (2 1/2 g portions) over a period of 30 minutes. After addition was complete, the solution was held at 80 °C for 3 hours. An additional 4 g of paraformaldehyde was added and heating was continued for 3 more hours. The clear solution was then stripped of water on a rotary evaporator, 100 ml of absolute ethanol added, then stripped again. This yielded a clear liquid which was characterized by $^{13}C$ and $^{31}P$ nuclear magnetic resonance.
[$\delta$ $^{31}P$ = 30.0 ppm; $J_{PH}$ = 549 Hz]

### B - Preparation of (Hydroxy)phosphinylmethyl Methacrylate

A 2-liter, 3-neck flask, fitted with a mechanical stirrer, nitrogen sparge, and a modified Dean Stark trap and condenser was charged with the following reactants:
96.0 grams (1 mole) hydroxymethylphosphorous acid
258 grams (3 mole) methacrylic acid

0.4 grams phenothiazine
0.8 grams benzyltrimethylammonium chloride
0.4 grams p-toluenesulfonic acid
1 Liter perchloroethylene
While stirring and keeping a nitrogen sparge, the mixture was heated to reflux for 7 hours during which time 17.8 ml of water was collected.

The two-phase mixture was then cooled and extracted three times with 600 ml of water. The combined water extracts were stripped on a rotary evaporator. Final removal of water and excess methacrylic acid was accomplished by vacuum distillation.

The product, a clear viscous liquid, was characterized by $^{13}C$ and $^{31}P$ nmr.
[$\delta$ $^{31}P$ = 21.8 ppm; $J_{PH}$ = 565 Hz]

Example 2 - Copolymer Preparation

A polymer containing the following monomers was prepared:

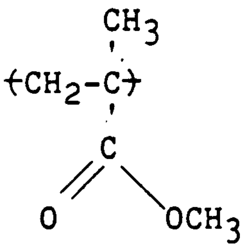
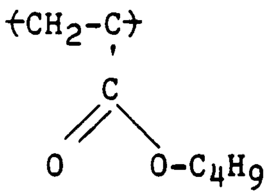
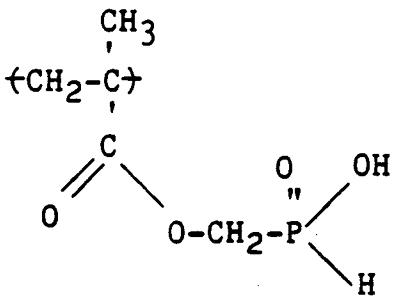

by weight 53% 45% 2%

In a 1-liter, round-bottom flask fitted with a mechanical stirrer was placed:
79.5 g methyl methacrylate
67.5 g butyl acrylate
3.0 g hydroxyphosphinylmethyl methacrylate
0.75 g benzoyl peroxide
700 mls methyl ethyl ketone

The solution was refluxed for 3 hours. Methyl ethyl ketone (300 ml) was distilled off leaving a clear, highly viscous solution.

Example 3- Preparation of (Dihydroxy)phosphinylmethyl-Methacrylate

To a 2-liter 3-necked flask, fitted with a mechanical stirrer, thermometer and addition funnel was charged one liter of acetonitrile, 236 g (1 mole) of diethylphosphonomethyl methacrylate,
$(CH_3CH_2O)_2P(=O)CH_2OCOC(CH_3)=CH_2$, and 300 g (2 moles)
sodium iodide. The mixture was stirred for 2 hours at room temperature. To the stirred mixture was added drop by drop through the addition funnel 217 g (2 moles) of trimethylchlorosilane over a period of 1 hour. Stirring at room temperature was continued for 2 hours after the addition was complete. Water (36.0 g, 2 moles) was added dropwise to the resulting mixture, which was stirred overnight at room temperature.

The precipitated salt was removed by filtration and washed with 200 ml of acetonitrile. To the filtrate was added 800 ml of absolute ethanol and then 80.0 g (2 moles) of sodium hydroxide in portions of 5 g each. The mixture was stirred for 4 hours. The resulting precipitate of the disodium salt of (dihydroxy)-phosphinylmethyl methacrylate, $Na_2O_2P(=O)CH_2OOCC(CH_3)=CH_2$, was removed by filtration, washed with absolute ethanol and dried under vacuum. The yield was 184 g (82 percent).

The disodium salt, dissolved in water, was converted to acid to addition of concentrated hydrochloric acid to pH below 1. The resulting solution was diluted with an equal volume of absolute ethanol and concentrated using a rotary evaporator heated at 40°C. Ethanol was added periodically during the process to replace the ethanol/water azeotrope being removed. After all of the water was removed, precipitated

sodium chloride was removed by filtration, and washed with ethanol. The filtrate and washings were concentrated to give a viscous, light yellow liquid, which rapidly turned darker yellow-brown upon exposure to light.

The product was characterized by nuclear magnetic resonance analysis as follows:

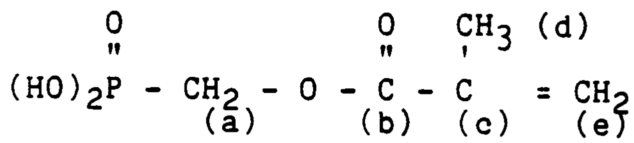

$^{31}P, \delta = 19.7, {}^2J_{PH} = 8.5$ Hz in $CDCl_3$; $= 16.0, {}^2J_{PH} = 8.5$ Hz in water

| $^{13}C$ | $\delta$ (ppm) |
|---|---|
| a | 57.9, $J_{PC} = 170.0$ HZ |
| b | 167.0, $^3J_{PC} = 9.8$ Hz |
| c | 117.4 |
| d | 17.8 |
| e | 134.9 |

Example 4

Copolymerization of (Dihydroxy)phosphinylmethylMethacrylate with Acrylic Acid

To a 100-ml round-bottom flask were charged 30 g of toluene, 9.5 g of acrylic acid, 0.5 g of (dihydroxy)phosphinylmethyl methacrylate, and 0.1 g of benzoyl peroxide. The solution was heated under a nitrogen atmosphere with magnetic stirring. At approximately 95 ° C, an exotherm began and white polymer began to precipitate. The mixture was held at approximately 100 ° C for 30 minutes and then cooled. The resulting polymer was removed by filtration, washed with fresh toluene, and dried under vacuum. A $^{31}P$ nmr of the polymer gave a new, slightly broadened peak at 14.5 ppm wrt $H_3PO_4$.

Example 5

Copolymerization of (Dihydroxy)phosphinylmethylMethacrylate with Acrylic Acid

The copolymerization of Example 2 was repeated using 150 ml of $H_2O$ as solvent and 0.015 g of Wako V-50 [2,2′-azobis(2-amidinopropane)hydrochloride)] as the initiator. Heating the solution to 90 ° C initiated an exotherm. The solution was held at 90 ° C for 1 hour. A 31P nmr of the water soluble copolymer gave a new peak at 14.3 ppm wrt $H_3PO_4$.

Example 6 - Preparation of Latex

The following ingredients were mixed in a 1-liter beaker to prepare an emulsion:

400 ml water
48 g Triton X-200 (28% solids) Trademark of Rohm and Haas, alkylaryl-ether sulfonate-anionic surfactant)
160 g methyl methacrylate (1.6 moles)
240 g ethyl acrylate (2.4 moles)

0.8 g ammonium persulfate

6.8 g 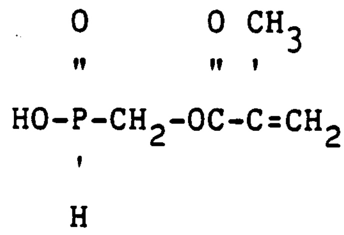 (0.04 mole).

In a reaction vessel consisting of a 2-liter, 3-necked, round-bottom flask fitted with a condenser, addition funnel, nitrogen inlet, thermometer and a mechanical stirrer was placed 100 ml of water and 100 ml of prepared emulsion. The flask was heated to 81° C under a nitrogen blanket. The mixture began to reflux and the temperature was raised to 90° C. When the reflux began to slow, the remainder of the emulsion was added dropwise so that the pot temperature remained at 88° C to 92° C. After the addition was finished, the temperature was raised to 97° C for one hour. The emulsion was then cooled to room temperature and filtered through a paint strainer.

Example 7

Preparation of Styrene-butadiene Latex Incorporating (Dihydroxy)phosphinylmethyl Methacrylate

(a) Emulsion polymerization was done as follows: initially the reactor was charged with 73 parts by weight of water, 0.01 part by weight of pentasodium salt of (carboxymethylimino) bis(ethylenenitrilo)-tetraacetic acid (1 percent solution) and 0.70 part by weight of seed latex (polystyrene, 270Å, (27 nm) 39.7 percent solids). To this mixture was added concurrently a first stream of 62 parts by weight of styrene and 0.5 parts by weight of tert-dodecyl mercaptan; a second stream of 38 parts by weight of butadiene; a third stream of 15 parts by weight of water, 0.7 parts by weight of sodium persulfate, 0.1 part by weight of 10 percent ammonium hydroxide and 0.5 part by weight of sodium salt of dodecylated sulfonated phenyl ether (45 percent solution) and a fourth stream of 12 parts by weight of water and 2.0 parts by weight of the disodium salt of (dihydroxy)phosphinylmethyl methacrylate. The polymerization was carried out at 90° C and the addition time was 4 hours.

The product contained 45.2 percent by weight of solids and had a particle diameter of 1730Å (173 nm).

(b) A modified latex was prepared as above, using 4.0 parts by weight of the disodium salt of (dihydroxy)phosphinylmethyl methacrylate. The resulting latex contained 40.6 percent by weight of solids and had a particle diameter of 1730Å (173 nm).

The foregoing latexes can be used for paper coating and in industrial coatings.

Example 8 - Flash Rust Test

A latex was prepared by the procedure described in Example 6 from the following ingredients: 400 ml of water, 48 g of Triton X-200 (28 percent solids), 160 g of methyl methacrylate, 240 g of ethyl acrylate, 0.8 g of ammonium persulfate, and 4.0 g of methacrylic acid. This latex was not an example of the invention, and was included for comparative purposes.

On a cold rolled steel panel, coatings of the latex prepared in Example 6 and the comparative latex were placed on different parts of the panel. The coatings were allowed to air dry and were then heated at 150° C for one hour.

The clear coatings obtained were scribed with an X, and a vial of water was turned over onto each X. After being left overnight, the portion of the panel coated with the comparative latex demonstrated a high degree of rusting, whereas the portion coated with the latex from example 6 demonstrated little or no rusting.

The example shows that a latex containing the monomers of this invention demonstrate enhanced corrosion prevention properties.

Example 9 - Preparation of Latex

In a 1-gallon glass reactor provided with an agitator and a device for monitoring the reactor temperature

was placed on initial charge comprising 70 parts by weight of deionized water and 2 parts by weight of seed latex (95 percent styrene, 5 percent acrylic acid with sodium lauryl sulfate as surfactant, 280Å (28 nm). The reactor was purged with nitrogen, agitated, and heated to 90°C. The monomer charge comprising 49.5 parts by weight of methyl methacrylate, 49.5 parts by weight of n-butyl acrylate and 1.0 parts by weight of (hydroxy)phosphinylmethyl methylmethacrylate was added to the reactor at time = 0 minute for a total of 120 minutes at a feeding rate of 400 $cm^3$/hr. The initiator charge comprising 97.56 parts by weight of deionized water, 1.22 parts by weight of $NaHCO_3$ and 1.22 parts by weight of $Na_2S_2O_8$ was added to the reactor beginning at time = 0 minute for a total of 150 minutes at a feeding rate of 123 $cm^3$/hr.

Following the addition of all the initiator charge (i.e. at time = 150 minutes), the mixture was continued to be agitated at 90°C under nitrogen for 30 mintues. The product contained approximately 50 percent solids.

The latex produced in accordance with the above procedure is suitable for use in industrial coatings, architectural coatings, plastic coatings, paper coatings, adhesives and high barrier coatings. A clear coating composition comprising this latex exhibited good salt-fog corrosion resistance as tested by ASTM B117 method.

Example 10

A pigmented, high gloss, anticorrosive paint for metals was prepared by blending the following ingredients at room temperature:

| | |
|---|---|
| Latex prepared in Example 9 (ph = 103, adjusted with EDA, 0.1 weight percent $NaNO_2$ added) | 150 g |
| 25% non-ionic surfactant/12.5 % wetting agent | 1.2 g |
| Ball - Milled Pigment Grind<br>$H_2O$ (1000 parts by weight)<br>$TiO_2$ (1000 parts by weight)<br>Dispersant (1 part by weight) | 100 g |
| 25% non-ionic surfactant/12.5% wetting agent (added to ball-milled pigment grind) | 0.8 g |
| Methyl carbitol | 7.2 g |
| Defoamer/non-ionic surfactant, emulsifier (1:1 mixture) | 0.6 g |
| Urethane-based polymeric associative thickener | 0.4 g |

The paint showed good corrosion resistance, blistering resistance and high gloss (90 sheen at 60° angle).

**Claims**

**Claims for the following Contracting States : BE, CH, DE, FR, GB, IT, LI, NL, SE**

**1.** A latex composition which comprises a polymeric composition which comprises the reaction product of:
(a) between 0.5 and 100 percent by weight of a (hydroxy)phosphinylalkyl acrylate, (hydroxy)-phosphinylalkyl methacrylate, a (dihydroxy)phosphinylalkyl acrylate, methacrylate or ethacrylate, or an alkali metal, alkaline earth metal or ammonium salt thereof; and
(b) between 0 and 99.5 weight percent of a compound containing a polymerizable 1,2-ethylenically unsaturated moiety.

**2.** A latex composition as claimed in Claim 1, which comprises the reaction product of:
(a) between 1 and 10 percent by weight of a (hydroxy)phosphinyl acrylate, (hydroxy)phosphinylalkyl methacrylate, a (dihydroxy)phosphinylalkyl acrylate, methacrylate or ethacrylate, or an alkali metal, alkaline earth metal or ammonium salt thereof; and
(b) between 90 and 99 percent by weight of a compound containing a polymerizable 1,2-ethylenically unsaturated moiety.

**3.** A latex composition as claimed in Claim 1 or 2 wherein the (hydroxy)phosphinylalkyl acrylate, (hydroxy)phosphinylalkyl methacrylate and alkali metal, alkaline earth metal or ammonium salt thereof corresponding to the formula:

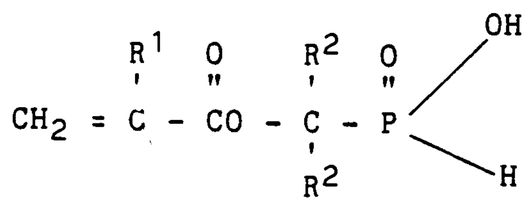

wherein:
$R^1$ is hydrogen or methyl; and
$R^2$ is hydrogen or $C_{1-10}$ alkyl.

**4.** A latex composition as claimed in Claims 1 or 2, wherein the (dihydroxy) phosphinyl Acrylic Monomer is represented by the formula

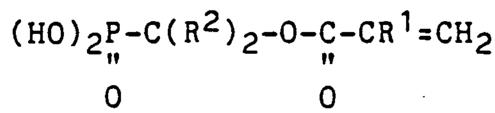

or

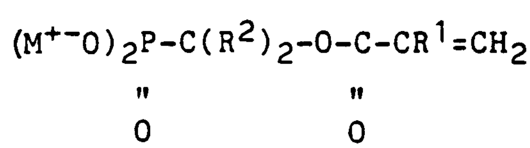

wherein $R^1$ is hydrogen, methyl or ethyl; $R^2$ is selected independently from hydrogen and alkyl of 1-10 carbon atoms and $M^+$ is an ammonium or alkali metal cation or 1/2 an alkaline earth metal cation.

**5.** A process for preparing a latex composition as claimed in any of the preceding claims, which comprises copolymerizing between 0.5 and 100 percent by weight of monomer (a) and between 0 and 99.5 percent by weight of monomer (b).

**6.** Anticorrosive paint for metals, comprising a latex composition as claimed in any of claims 1 to 4.

**Claims for the following Contracting States : AT, ES, GR**

**1.** A process for preparing a latex composition containing a polymeric composition which comprises

copolymerizing:

(a) between 0.5 and 100 percent by weight of a (hydroxy)phosphinylalkyl acrylate, (hydroxy)-phosphinyl alkyl methacrylate, a (dihydroxy)Phosphinylalkyl acrylate, methacrylate or ethacrylate, or an alkali metal, alkaline earth metal or ammonium salt thereof; with

(b) between 0 and 99.5 weight percent of a compound containing a polymerizable 1,2-ethylenically unsaturated moiety.

**2.** A method as claimed in Claim 1, which comprises copolymerizing:

(a) between 1 and 10 percent by weight of a (hydroxy)phosphinyl alkyl acrylate, (hydroxy)-phosphinylalkyl methacrylate, a (dihydroxy)phosphinylalkyl acrylate, methacrylate or ethacrylate, or an alkali metal, alkaline earth metal or ammonium salt thereof; and

(b) between 90 and 99 percent by weight of a compound containing a polymerizable 1,2-ethylenically unsaturated moiety.

**3.** A method as claimed in Claim 1 or 2 wherein the (hydroxy)phosphinylalkyl acrylate, (hydroxy)-phosphinylalkyl methacrylate and alkali metal, alkaline earth metal or ammonium salt thereof corresponding to the formula:

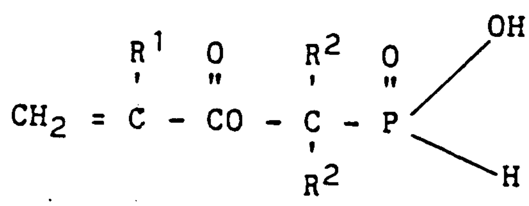

wherein:

$R^1$ is hydrogen or methyl; and

$R^2$ is hydrogen or $C_{1-10}$ alkyl.

**4.** A method as claimed in Claims 1 or 2, wherein the (dihydroxy) phosphinyl Acrylic Monomer is represented by

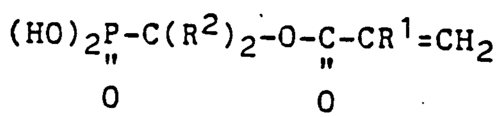

or

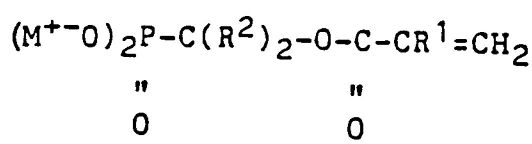

wherein $R^1$ is hydrogen, methyl or ethyl; $R^2$ is selected independently from hydrogen and alkyl of 1-10 carbon atoms and $M^+$ is an ammonium or alkali metal cation or 1/2 an alkaline earth metal cation.

**5.** Use of a latex composition prepared according to any of claims 1 to 4 in anticorrosive paint for metals.

**Revendications**

**Revendications pour les Etats contractions suivants : BE, CH, DE, FR, GB, IT, LI, NL, SE**

**1.** Composition de latex comprenant une composition polymère qui comprend le produit de réaction de :

(a) entre 0,5 et 100% en poids d'un acrylate de (hydroxy)phosphinylalkyle, d'un méthacrylate de (hydroxy)phosphinylalkyle, d'un acrylate, méthacrylate ou éthacrylate de (dihydroxy)-phosphinylalkyle, ou d'un de leurs sels de métal alcalin, de métal alcalino-terreux ou d'ammonium;

et

(b) entre 0 et 99,5% en poids d'un composé contenant un groupement polymérisable à insaturation 1,2-éthylénique.

**2.** Composition de latex selon la revendication 1, qui comprend le produit de réaction de :

(a) entre 1 et 10% en poids d'un acrylate de (hydroxy)phosphinylalkyle, d'un méthacrylate de (hydroxy)phosphinylalkyle, d'un acrylate, méthacrylate ou éthacrylate de (dihydroxy)-phosphinylalkyle, ou d'un de leurs sels de métal alcalin, de métal alcalino-terreux ou d'ammonium; et

(b) entre 90 et 99% en poids d'un composé contenant un groupement polymérisable à insaturation 1,2-éthylénique.

**3.** Composition de latex selon la revendication 1 ou 2, dans laquelle l'acrylate de (hydroxy)-phosphinylalkyle, le méthacrylate de (hydroxy)phosphinylalkyle et leurs sels de métal alcalin, de métal alcalino-terreux ou d'ammonium répondent à la formule :

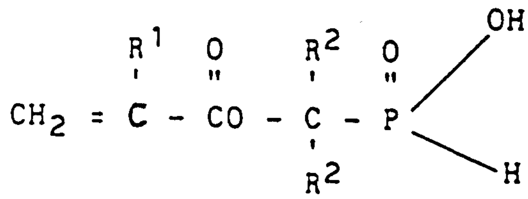

dans laquelle :

$R^1$ est un hydrogène ou un groupe méthyle; et

$R^2$ est un hydrogène ou un groupe alkyle en $C_1$-$C_{10}$.

**4.** Composition de latex selon la revendication 1 ou 2, dans laquelle le monomère (dihydroxy)-phosphinylacrylique est représenté par la formule

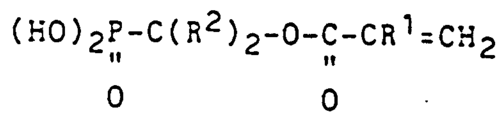

ou

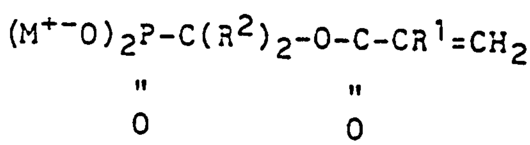

où $R^1$ est un hydrogène, un groupe méthyle ou éthyle; $R^2$ est choisi indépendamment parmi un hydrogène et un groupe alkyle de 1-10 atomes de carbone et $M^+$ est un cation ammonium ou métal alcalin ou la moitié d'un cation de métal alcalinoterreux.

**5.** Procédé de préparation d'une composition de latex selon l'une quelconque des revendications précédentes, qui comprend la copolymérisation d'entre 0,5 et 100% en poids de monomère (a) avec entre 0 et 99,5% en poids de monomère (b).

**6.** Peinture anticorrosive pour métaux, comprenant une composition de latex selon l'une quelconque des revendications 1 à 4.

**Revendications pour les Etats contractions suivants : AT, ES, GR**

**1.** Procédé de préparation d'une composition de latex contenant une composition polymère, qui comprend la copolymérisation de :

(a) entre 0,5 et 100% en poids d'un acrylate de (hydroxy)phosphinylalkyle, d'un méthacrylate de (hydroxy)phosphinylalkyle, d'un acrylate, méthacrylate ou éthacrylate de (dihydroxy)-phosphinylalkyle, ou d'un de leurs sels de métal alcalin, de métal alcalino-terreux ou d'ammonium; avec

(b) entre 0 et 99,5% en poids d'un composé contenant un groupement polymérisable à insaturation 1,2-éthylénique.

**2.** Procédé selon la revendication 1, qui comprend la copolymérisation de :

(a) entre 1 et 10% en poids d'un acrylate de (hydroxy)phosphinylalkyle, d'un méthacrylate de (hydroxy)phosphinylalkyle, d'un acrylate, méthacrylate ou éthacrylate de (dihydroxy)-phosphinylalkyle, ou d'un de leurs sels de métal alcalin, de métal alcalino-terreux ou d'ammonium; avec

(b) entre 90 et 99% en poids d'un composé contenant un groupement polymérisable à insaturation 1,2-éthylénique.

**3.** Procédé selon la revendication 1 ou 2, dans lequel l'acrylate de (hydroxy)phosphinylalkyle, le méthacrylate de (hydroxy)phosphinylalkyle et leurs sels de métal alcalin, de métal alcalino-terreux ou d'ammonium répondent à la formule :

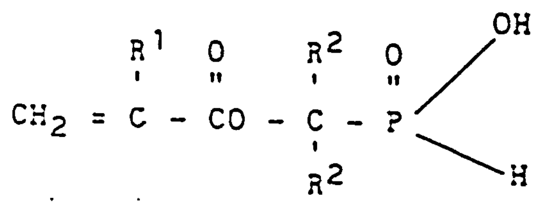

dans laquelle :

$R^1$ est un hydrogène ou un groupe méthyle; et

$R^2$ est un hydrogène ou un groupe alkyle en $C_1$-$C_{10}$.

**4.** Procédé selon la revendication 1 ou 2, dans lequel le monomère (dihydroxy)phosphinylacrylique est représenté par

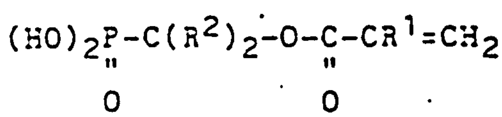

ou

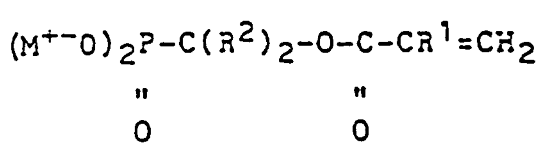

où $R^1$ est un hydrogène, un groupe méthyle ou éthyle; $R^2$ est choisi indépendamment parmi un hydrogène et un groupe alkyle de 1-10 atomes de carbone et $M^+$ est un cation ammonium ou métal alcalin ou la moitié d'un cation de métal alcalinoterreux.

**5.** Utilisation d'une composition de latex préparée selon l'une quelconque des revendications 1 à 4 dans une peinture anticorrosive pour métaux.

**Patentansprüche**

**Patentansprüche für folgende Vertragsstaaten : BE, CH, DE, FR, GB, IT, LI, NL, SE**

**1.** Latexzusammensetzung, die eine polymere Zusammensetzung enthält, umfassend das Reaktionsprodukt von:

(a) zwischen 0,5 und 100 Gew.-% eines (Hydroxy)phosphinylalkylacrylats, (Hydroxy)-phosphinylalkylmethacrylats, eines (Dihydroxy)phosphinylalkylacrylats, -methacrylats oder -ethacrylats oder eines Alkalimetall-, Erdalkalimetall- oder Ammoniumsalzes davon und
(b) zwischen 0 und 99,5 Gew.-% einer Verbindung, die eine polymerisierbare, 1,2-ethylenisch ungesättigte Gruppierung enthält.

**2.** Latexzusammensetzung nach Anspruch 1, umfassend das Reaktionsprodukt von:
(a) zwischen 1 und 10 Gew.-% eines (Hydroxy)phosphinylalkylacrylats, (Hydroxy)-phosphinylalkylmethacrylats, eines (Dihydroxy)phosphinylalkylacrylats, -methacrylats oder -ethacrylats oder eines Alkalimetall-, Erdalkalimetall- oder Ammoniumsalzes davon und
(b) zwischen 90 und 99 Gew.-% einer Verbindung, die eine polymerisierbare, 1,2-ethylenisch ungesättigte Gruppierung enthält.

**3.** Latexzusammensetzung nach Anspruch 1 oder 2, worin das (Hydroxy)phosphinylalkylacrylat, (Hydroxy)-phosphinylalkylmethacrylat und Alkalimetall-, Erdalkalimetalloder Ammoniumsalz davon der Formel entspricht:

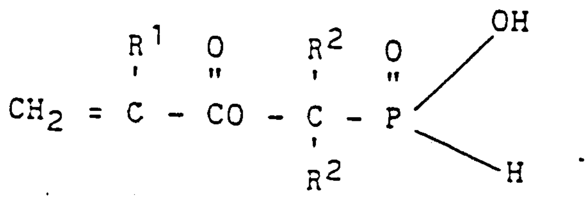

worin:
$R^1$ Wasserstoff oder Methyl ist und $R^2$ Wasserstoff oder $C_{1-10}$ Alkyl ist.

**4.** Latexzusammensetzung nach Anspruch 1 oder 2, worin das (Dihydroxy)phosphinyl-Acrylmonomer durch die Formel:

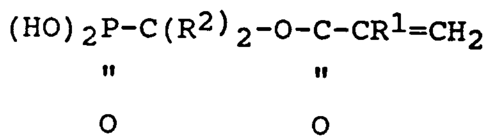

oder

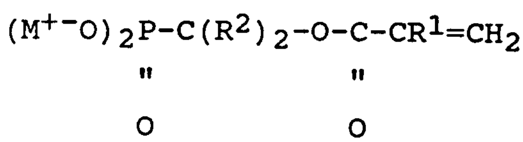

dargestellt ist, worin $R^1$ Wasserstoff, Methyl oder Ethyl ist, $R^2$ unabhängig aus Wasserstoff und Alkyl von 1 bis 10 Kohlenstoffatomen ausgewählt ist und $M^+$ ein Ammoniumoder Alkalimetallkation oder 1/2 Erdalkalimetallkation ist.

**5.** Verfahren zur Herstellung einer Latexzusammensetzung nach einem der vorhergehenden Ansprüche, umfassend das Copolymerisieren von zwischen 0,5 und 100 Gew.-% Monomer (a) und zwischen 0 und 99,5 Gew.-% Monomer (b).

**6.** Antikorrosionsfarbe für Metalle, umfassend eine Latexzusammensetzung nach einem der Ansprüche 1 bis 4.

**Patentansprüche für folgende Vertragsstaaten : AT, ES, GR**

1. Verfahren zur Herstellung einer Latexzusammensetzung, die eine polymere Zusammensetzung enthält, umfassend das Copolymerisieren von:
(a) zwischen 0,5 und 100 Gew.-% eines (Hydroxy)phosphinylalkylacrylats, (Hydroxy)-phosphinylalkylmethacrylats, eines (Dihydroxy)phosphinylalkylacrylats, -methacrylats oder -ethacrylats oder eines Alkalimetall-, Erdalkalimetall- oder Ammoniumsalzes davon und
(b) zwischen 0 und 99,5 Gew.-% einer Verbindung, die eine polymerisierbare, 1,2-ethylenisch ungesättigte Gruppierung enthält.

2. Verfahren nach Anspruch 1, umfassend das Copolymerisieren von:
(a) zwischen 1 und 10 Gew.-% eines (Hydroxy)phosphinylalkylacrylats, (Hydroxy)-phosphinylalkylmethacrylats, eines (Dihydroxy)phosphinylalkylacrylats, -methacrylats oder -ethacrylats oder eines Alkalimetall-, Erdalkalimetall- oder Ammoniumsalzes davon und
(b) zwischen 90 und 99 Gew.-% einer Verbindung, die eine polymerisierbare, 1,2-ethylenisch ungesättigte Gruppierung enthält.

3. Verfahren nach Anspruch 1 oder 2, worin das (Hydroxy)-phosphinylalkylacrylat, (Hydroxy)-phosphinylalkylmethacrylat und Alkalimetall-, Erdalkalimetall- oder Ammoniumsalz davon der Formel entspricht:

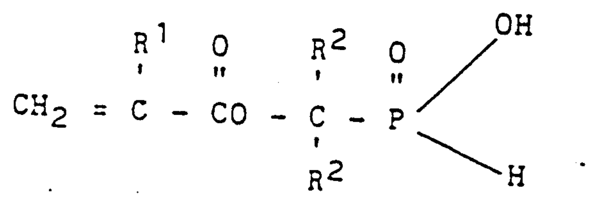

worin:
R1 Wasserstoff oder Methyl ist und R2 Wasserstoff oder $C_{1-10}$ Alkyl ist.

4. Verfahren nach Anspruch 1 oder 2, worin das (Dihydroxy)phosphinyl-Acrylmonomer dargestellt ist durch

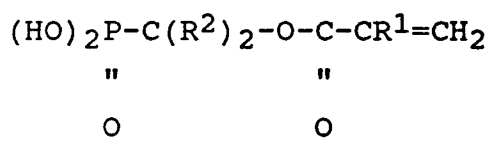

oder

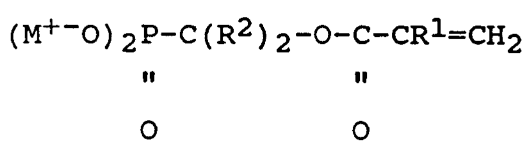

worin $R^1$ Wasserstoff, Methyl oder Ethyl ist, $R^2$ unabhängig aus Wasserstoff und Alkyl von 1 bis 10 Kohlenstoffatomen ausgewählt ist und $M^+$ ein Ammonium- oder Alkalimetallkation oder 1/2 Erdalkalimetallkation ist.

5. Verwendung einer Latexzusammensetzung, die nach einem der Ansprüche 1 bis 4 hergestellt worden ist, in Antikorrosionsfarben für Metalle.